# EUROPÄISCHE PATENTSCHRIFT

(11) **EP 0 772 508 B1**
(45) Veröffentlichungstag und Bekanntmachung des Hinweises auf die Patenterteilung: **09.12.1998**
(21) Anmeldenummer: 95927670.0
(22) Anmeldetag: 20.07.1995
(51) Int. Cl.: B23K 13/08, B23K 13/04, B23K 13/01

(54) **VERFAHREN UND ANORDNUNG ZUM SCHWEISSEN VON WERKSTÜCKEN**
WORKPIECE WELDING PROCESS AND DEVICE
PROCEDE ET DISPOSITIF DE SOUDAGE DE PIECES

(30) Priorität: 29.07.1994 DE 4426894
(43) Veröffentlichungstag der Anmeldung: 14.05.1997
(73) Patentinhaber: KUKA Schweissanlagen GmbH, 86165 Augsburg (DE)
(72) Erfinder: MAZAC, Karel, D-86316 Friedberg (DE)
(74) Vertreter: Ernicke, Hans-Dieter, Dipl.-Ing.
(86) Internationale Anmeldenummer: EP9502856
(87) Internationale Veröffentlichungsnummer: WO9604099

(56) Entgegenhaltungen:
- DE-A- 2 231 717
- FR-A- 2 399 299
- US-A- 2 625 637
- US-A- 3 482 073
- US-A- 4 197 441

## Beschreibung

Die Erfindung betrifft ein Verfahren und eine Anordnung zum Schweißen von Werkstücken mit den Merkmalen im Oberbegriff des Verfahrens- und Sachhauptanspruches.

Ein solches Verfahren nebst Anordnung ist aus der DE-B-1 099 665 bekannt. Sie zeigt die konduktive Erwärmung zweier miteinander stumpf zu verschweißender Bleche mittels eines hochfrequenten Wechselstrom, der an die Bleche angelegt wird und unter Ausnutzung des Skin-Effektes entlang der spaltnahen Blechränder fließt. Sobald die Blechränder ausreichend plastifiziert sind, werden sie durch eine Staucheinrichtung stumpf zusammengepreßt. Die Bleche sind untereinander und mit der Schweißstromquelle über entsprechende Leitungen in Reihe geschaltet. Der Stromfluß an den Blechrändern kann auf unterschiedliche Weise durch Stromableitung mittels elektrisch leitfähiger Spannelemente beeinflußt werden, wobei eine zusätzliche Einflußmöglichkeit über eine geometrische Veränderung der Frontkontur der Spannelemente und eine Variation des Abstands der Spannelementränder von den Blechrändern besteht. Der Stromfluß kann ferner induktiv über Stäbe aus magnetischem Material beeinflußt werden, die ein- oder beidseits der Bleche neben den Blechrändern plaziert sind. Im Spaltbereich kann außerdem ein Stabglied vorhanden sein, das zwar nicht selbst stromdurchflossen ist, das durch seine elektrische Leitfähigkeit aber ebenfalls eine induktive Wirkung auf den Stromfluß hat. Neben dem Stumpfschweißen lehrt die Entgegenhaltung auch die Anwendung der verschiedenen Erwärmungstechniken für das Überlappungsschweißen. Die Schweißstromquelle wird durch einen zeitgesteuerten Schalter an- und abgeschaltet, wobei auch die Staucheinrichtung zeitgesteuert ist. Der Heizstrom wird nur an- und abgeschaltet, während der Erwärmungsphase aber nicht in der Amplitude verändert.

Die US-C 3 591 757 zeigt ebenfalls verschiedene Ausführungsbeispiele für die konduktive Erwärmung zweier miteinander zu verschweißender Bleche. Hier sind die beiden Bleche allerdings elektrisch parallel zueinander geschaltet, wobei im Spaltbereich ein elektrischer Rückleiter vorhanden ist. Auch hier soll ein hochfrequenter Heiz- oder Schweißstrom auf die Blechränder konzentriert werden, was durch die elektrische Parallelschaltung der Bleche und den erforderlichen Rückleiter allerdings nicht in der gewünschten wirksamen Weise geschieht. Die Heizstromfrequenz muß für eine gleichmäßige Erwärmung mit steigender Blechdicke niedriger werden, was auf der anderen Seite aber eine unerwünschte Verbreiterung der Stromspur und der damit einhergehenden Erwärmungstiefe zur Folge hat. Auch hier wird der Heiz- oder Schweißstrom nur ein- ausgeschaltet, aber nicht moduliert.

Die DE-A 22 31 717 zeigt eine weitere Variante des Stumpf- oder Überlappungsschweißens von Blechen mittels eines hochfrequenten Wechselstroms, wobei die Bleche in ähnlicher Weise wie bei der vorerwähnten US-Schrift parallel geschaltet sind. Auch hier übt ein elektrischer Rückleiter einen induktiven Einfluß auf den Stromfluß aus, was jedoch mit den gleichen Nachteilen wie bei der US-Schrift behaftet ist. Zusätzlich soll bei dieser Entgegenhaltung über eine separat zu schaltende hohe Kapazität ein magnetischer Impuls nach Abschalten des Heizstromes auslösbar sein, mit dem beim Überlappungsschweißen die Blechränder zusammengepreßt werden. Die Kapazität wird wird von einer eigenen Gleichstromquelle geladen und ist gegenpolig geschaltet, so daß der ausgelöste Impuls in Gegenrichtung zu Heizstrom fließt. Der Heizstrom ist auch hier während der Erwärmungsphase konstant.

Die US-A 2 625 637 zeigt ein Schweiß- bzw. Lötverfahren mit einer induktiven Erwärmung der Werkstücke durch einen hochfrequenten Wechselstrom. Hierbei findet jedoch kein Stauchen oder sonstiges mechanisches Verbinden der Werkstücke statt. Durch den Schweißstrom wird lediglich eine Schmelze erzeugt, die durch verschiedene Leitmaßnahmen an der Schweißstelle stabilisiert und gehalten wird. Die Schrift offenbart ein Stromprogramm. Dieses bezieht sich ausschließlich auf dieses auf Schmelzbasis arbeitende Schweißverfahren und hat keinen Bezug auf einen Stauchbeginn. Außerdem zeigt das Stromprogramm nicht nur einen hohen Schweißstrom, sondern auch eine anschließende niedrigere Nachheizphase, die zum Schweißprozeß dazugehört.

Die vorbekannten Schweißtechniken haben sich in der Praxis trotz guter Ansätze nicht bewährt und haben keinen Eingang in einen großtechnischen Einsatz gefunden. Die erzielten Schweißergebnisse zeigten nicht die erforderliche und vor allem reproduzierbare Qualität.

Der Erfindung liegt die Aufgabe zugrunde, ein Verfahren und eine Anordnung zum Schweißen aufzuzeigen, die den gestellten Qualitätsanforderungen gerecht werden, einen breiten Anwendungsbereich besitzen und wenig Einschränkungen unterliegen.

Die Erfindung löst diese Aufgabe mit den Merkmalen im Verfahrens- und Sachhauptanspruch.

Durch das Stromprogramm und die kurzzeitige Erhöhung des Heizstroms kurz vor oder bei Stauchbeginn wird die Schweißqualität günstig beeinflußt und reproduzierbar. Die Maßnahmen wirken sich positiv auf die Tiefe der Wärmeeinflußzone und auf die Schweißpräzision aus. Durch die erfindungsgemäße Ausgestaltung erschließt sich dem Schweißverfahren und der zugehörigen Schweißanordnung der großtechnische Einsatzbereich, insbesondere in der Fahrzeugindustrie.

Zum Schweißen von beschichteten Blechen, z. B. verzinkten Blechen, empfiehlt es sich, die Beschichtung vor oder bei Beginn des eigentlichen Schweißvorgangs durch ein oder mehrere kurze Stromimpulse zu beseitigen. Die Beschichtung wird dabei vorteilhafterweise nur im Schweißbereich an den Blechrändern entfernt und bleibt an den anderen Blechbereichen erhalten. Die Freilegung der Blechränder in der Schweißzone hat günstige Auswirkungen auf die Schweißqualität.

Mit dem erfindungsgemäßen Verfahren und der zugehörigen Schweißanordnung können beliebige Arten von Blechen geschweißt werden. Dies können ebene Bleche aber auch räumlich verformte Bleche, insbesondere Blechprofile, sein.

Die erfindungsgemäße Schweißtechnik hat besondere Vorteile hinsichtlich der Schnelligkeit und einfachen Handhabbarkeit des Schweißverfahrens und der Schweißanordnung. Es bestehen besonders günstige und feinfühlige Einflußmöglichkeiten zur Steuerung des Schweißprozesses und zur Sicherstellung der gewünschten Schweißqualität. Mit dem Stromprogramm können alle Schweißverfahren ausgeführt werden, bei denen die Blechränder unter Ausnutzung des Skin-Effektes mit hochfrequentem Wechselstrom erwärmt werden. Dabei können auch die aus dem Stand der Technik in den Grundzügen bekannten Schweißtechniken zum Einsatz kommen. Die Werkstücke können konduktiv, d. h. durch einen angelegten Stromdurchfluß, oder induktiv durch elektromagnetische Wechselfelder erwärmt werden. Neben Stumpf- und Überlappungsschweißen sind auch beliebig andere Techniken zur Schaffung der Schweißverbindung zwischen den erwärmten Blechrändern einsetzbar.

Im bevorzugten Ausführungsbeispiel werden die Bleche konduktiv erwärmt und dabei in Reihe mit der Schweißstromquelle geschaltet. Durch die Reihenschaltung kann die Stromspur und damit die Wärmeeinbringung über die ganze Stirnfläche der beiden Bleche nach Wunsch beeinflußt und insbesondere konstant gehalten werden können. Die Werkstückränder werden am Spalt vom Strom gegenläufig durchflossen. Dies führt zu einer gleichmäßigeren Erwärmung der Werkstückränder. Die Stromfrequenz ist nicht von der Blechdicke bestimmt und läßt sich im wesentlichen frei wählen. Sie kann sehr hoch eingestellt werden. Die Wärmeeinflußzone kann dadurch entsprechend schmal gehalten werden. Dies ermöglicht kurze Ausspannlängen, eine höhere Blechsteifigkeit und damit auch die Anwendung der zum Verbinden erforderlichen Stauchkraft. Andererseits sinkt die Blechverkürzung. Es ergibt sich eine erhöhte Präzision der Schweißverbindung und der Bauteile. Die Wulstbildung sowie der Zwang zur Nacharbeit werden verringert.

Die Erfindung sieht darüber hinaus vor, die Energiezufuhr und Wärmeeinbringung in die beiden Bleche bewußt unterschiedlich zu steuern und gegebenenfalls auch während des Schweißprozesses zu verändern. Dies ermöglicht es, Werkstücke mit unterschiedlichen Blechdicken und/oder unterschiedlichen Werkstoffen zu schweißen. Vor allem für die Verschweißung von Leichtmetallen, insbesondere Aluminium-Verbindungen, ist die Verringerung und Steuerbarkeit der Wärmeeinflußzone von großem Vorteil. Es lassen sich auch andere dia- und/oder paramagnetische Werkstoffe gut miteinander verschweißen.

Die unterschiedliche Wärmeeinbringung der Werkstücke kann zum einen durch Stromableitung mittels eines Zusatzleiters, geeigneter Spannelemente oder mit dgl. anderen geeigneten Maßnahmen erreicht werden. Für das eine Blech, vorzugsweise für das wegen der geringeren Dicke und/oder aus Werkstoffgründen thermisch empfindlichere Blech, wird durch die Stromableitung die eingebrachte Wärmemenge reduziert, so daß beide Werkstücke vorzugsweise die gleiche Schweißtemperatur haben.

Mit dem Zusatzleiter kann aber auch zusätzlich eine induktive Beeinflussung des Erwärmungsverhaltens am thermisch unempfindlicheren Werkstück erreicht werden. Dies ist das Blech mit der größeren Dicke oder dem höheren Schmelzpunkt. Dies ist vor allem günstig für das Schweißen von unterschiedlichen dicken Werkstücken. Beim dickeren Werkstück wird gezielt die dem dünneren Werkstück gegenüberliegende Randzone erwärmt und plastifiziert.

Das erfindungsgemäße Schweißverfahren hat einen hohen Wirkungsgrad. Aufgrund der konzentrierten Erwärmung der Stirnflächen sind zudem größere Nahtlängen bei gleicher Generatorleistung als beim Stand der Technik möglich. Andererseits können bei gleicher Nahtlänge kleinere und billigere Schweißvorrichtungen gebaut werden. Auch die kleinere spezifische Stauchkraft wirkt sich in einer Möglichkeit zur Maschinenverkleinerung aus.

Für das Schweißverfahren und die Schweißanordnung bietet sich als weiterer Vorteil, daß durch die in breiten Grenzen wählbare Frequenz des Schweißstromes keine Anpassung des Generators bzw. der Stromquelle nötig ist. Außerdem vergrößert sich der Einsatzbereich der Schweißvorrichtung.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: eine schematische Draufsicht auf eine Schweißanordnung mit einem Zusatzleiter über dem thermisch empfindlicheren Blech,
- Figur 2:: eine Stirnansicht der Anordnung von Figur 1 in Richtung von Pfeil II,
- Figur 3:: eine alternative Anordnung mit dem Zusatzleiter auf dem thermisch unempfindlicheren Werkstück,
- Figur 4:: eine Stirnansicht der Anordnung von Figur 3 gemäß Pfeil IV von Figur 3,
- Figur 5:: eine Stirnansicht einer alternativen Schweißanordnung mit unterschiedlichen Spannelementen,
- Figur 6:: eine Variante der Werkstück- und Spanngeometrie in Seiten- und Stirnansicht und
- Figur 7:: ein Stromprogramm im Ablaufdiagramm.

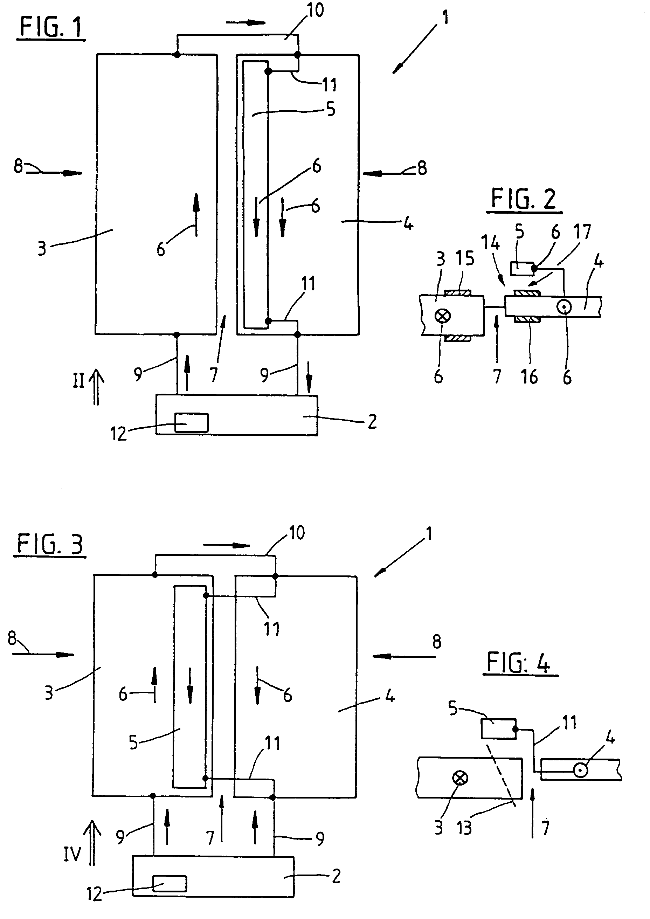

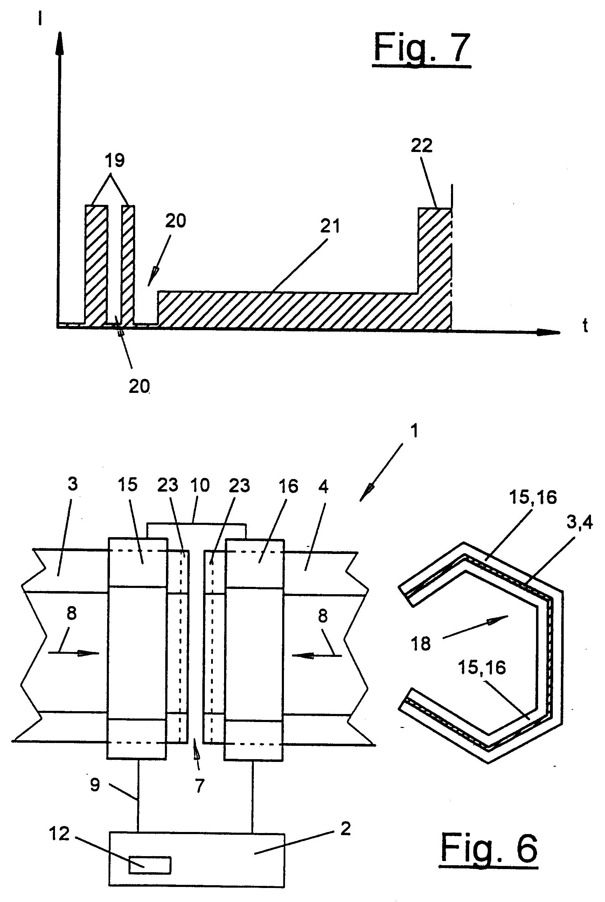

In den Zeichnungen ist in mehreren Varianten eine Anordnung bzw. Schweißvorrichtung (1) zum Verschweißen von zwei einzelnen, vorzugsweise stromleitenden, Werkstücken (3,4) dargestellt. Bei den Werkstücken (3,4) handelt es sich in Figur 1 bis 5 um im wesentlichen ebene Bleche, beispielsweise aus dem Fahrzeugbau. Figur 6 zeigt eine Variante mit Werkstücken (3,4), die eine räumlich beliebig verformte Kontur (18) aufweisen und z.B. profilartig mit einem C-förmig gebogenen oder gewölbten Querschnitt ausgebildet sind. Es können aber auch andere Werkstückarten zum Einsatz kommen.

Im einfachsten und nicht dargestellten Fall sind die Werkstücke (3,4) in den geometrischen Abmessungen, insbesondere ihrer Dicke und im Werkstoff gleich. Die Werkstücke (3,4) können aber auch thermisch unterschiedlich empfindlich sein. Wie die Stirndarstellungen von Figur 2 und 4 verdeutlichen, ist beispielsweise das eine Werkstück oder Blech (3) dicker als das andere Werkstück oder Blech (4). Das dünnere Blech (4) ist thermisch empfindlicher als das dickere Blech (3). Die unterschiedlichen Blechdicken der Werkstücke (3,4) können variieren. Ein bevorzugter Einsatzbereich sind Dickenunterschiede von ca. 1,5 bis 2,5. Derartige Bleche oder Platinen werden beispielsweise in der Automobiltechnik eingesetzt.

Alternativ oder zusätzlich können auch Werkstoffunterschiede zwischen den Werkstücken (3,4) bestehen. Das thermisch empfindlichere Werkstück (4) hat dann beispielsweise einen niedrigeren Schmelzpunkt als das thermisch unempfindlichere Werkstück (3). Beispielsweise besteht das Blech (4) aus Aluminium und das Blech (3) aus Stahl. Ansonsten können die Bleche (3,4) aus beliebigen elektrisch leitenden und plastifizierbaren Materialien, insbesondere Metallen, bestehen. Es können Eisen- und Nichteisenmetalle sein.

In der gezeigten Ausführung handelt es sich um das Stumpfschweißen zweier Bleche (3,4), die bevorzugt konduktiv durch einen an die Bleche (3,4) angelegten hochfrequenten Wechselstrom erwärmt und geschweißt werden. Alternativ kann die Blecherwärmung rein induktiv durch elektromagnetische Wechselwirkung mit beabstandeten elektrischen Leitern durchgeführt werden (nicht dargestellt). Es sind ferner Mischformen mit konduktiv/induktiver Beeinflussung der Erwärmung möglich.

In einer weiteren Abwandlung läßt sich die Schweißtechnik für das Überlappungsschweißen einsetzen. Gegebenenfalls kann auch die Impulstechnik zum Zusammenpressen oder Stauchen der Blechränder eingesetzt werden.

In der gezeigten Anordnung zum Stumpfschweißen sind die beiden Bleche (3,4) mit Abstand zueinander angeordnet und bilden zwischen sich einen offenen Spalt (7). Der Spalt (7) hat vorzugsweise eine gleichbleibende Breite, d.h. die Blechränder verlaufen parallel. Der Spalt (7) kann eine Breite von ca. 2 - 3 mm haben. Es sind aber auch andere Spaltbreiten möglich. Die Spaltbreite wirkt als Prozeßgröße und ist mittels einer veränderlichen Einspannung (14) oder auf andere geeignete Weise einstellbar.

Die Schweißvorrichtung (1) besteht aus einer Stromquelle (2), einer Einspannung (14) mit mehreren Spannelementen (15,16) für die Bleche (3,4) und einer Stauchvorrichtung (8) (nicht dargestellt). Die Stromquelle (2) besitzt einen Generator zur Erzeugung eines hochfrequenten Wechselstroms von ca. 10-1000 KHz. Sie beinhaltet ferner eine programmierbare Steuerung (12), bestehend aus einem Microprozessor-gestützten Computer, mehreren Datenspeichern und geeigneten Eingabe- und Ausgabeeinheiten für die Daten. Die Steuerung (12) hat ein oder mehrere gespeicherte Stromprogramme. Fig. 7 zeigt dazu ein beispielhaftes Ablaufdiagramm.

Die Schweißstromquelle (2) ist über Anschlußleitungen (9) mit den beiden Vorderseiten der Bleche (3,4) verbunden. Der Anschluß liegt vorzugsweise in Spaltnähe. Auf der gegenüberliegenden Rückseite sind die Bleche (3,4) durch eine Verbindungsleitung (10) miteinander elektrisch leitend verbunden. Damit sind die Bleche (3,4) und die Stromquelle (2) in Reihe miteinander geschaltet. Die Stromflußrichtung ist durch Pfeile (6) symbolisiert. An den spaltnahen Rändern der Bleche (3,4) fließt der Strom in entgegengesetzten Richtungen.

Die beiden Bleche (3,4) werden durch den angelegten hochfrequenten Wechselstrom an den spaltnahen Rändern erwärmt. Der Strom fließt unter Ausnutzung des Skin-Effekts vor allem an den Blechrändern entlang des Spaltes (7). Sobald die Randbereiche der Bleche (3,4) ausreichend erhitzt und plastifiziert sind, erfolgt ein Stauchschlag in Richtung der Pfeile (8), mit dem die Bleche (3,4) unter Schließung des Spalts (7) miteinander verbunden werden. Beim Stauchen wird durch eine geeignete Meßvorrichtung der Stauchweg und/oder die Blechverkürzung gemessen bzw. berechnet.

Die Stromquelle (2) kann mit beliebiger und veränderbarer Frequenz arbeiten. Der Strom oder die Leistung lassen sich durch die Steuerung (12) einstellen. Es empfiehlt sich eine Frequenz von mindestens 10 KHz, vorzugsweise mehr als 400 KHz. Für ein Verschweißen von Stahlblechen werden beispielsweise 400 KHz verwendet, für ein Verschweißen von Aluminiumblechen vorzugsweise 500 bis 600 KHz. Die Frequenz kann bis 1 MHz und darüber gesteigert werden.

Die gewählte Frequenz des Wechselstroms hängt im wesentlichen von der Werkstoffpaarung der Werkstücke (3,4) ab. Die Blechdicken und die Nahtlängen können dabei in weiten Grenzen variieren, ohne daß eine Anpassung der Frequenz bzw. des Generators erfolgen muß. Die Eindringtiefe des Stroms an den spaltnahen Blechrändern und damit die Wärmeeinflußzone ist allerdings von der Frequenz des Wechselstromes abhängig. Die Eindringtiefe bzw. Wärmeeinflußzone sinkt bei steigender Frequenz. Bei unterschiedlich dicken Blechen (3,4) kann wahlweise und zusätzlich zur nachfolgend beschriebenen Stromableitung durch einen Zusatzleiter (5) auch eine Beeinflussung der Wärmeeinflußzone durch die Höhe der Frequenz erfolgen.

Der Schweißprozeß kann mit einem Stromprogramm durchgeführt werden. Das Stromprogramm ist in der Steuerung (12) in einem geeigneten Datenspeicher abgelegt und wird von der Steuerung (12) abgearbeitet. Dabei werden die Werkstücke (3,4) in geeigneter Weise über mehrere wählbare Zeitabschnitte mit unterschiedlich hohen Strömen beaufschlagt.

Figur 7 zeigt in einer schematischen Darstellung ein Stromprogramm in einem Ablaufdiagramm. Der Ablauf kann sich in zwei Teilbereiche gliedern, nämlich eine erste Phase, in der eine eventuell vorhandene Beschichtung von den Blechrändern entfernt wird und eine zweite Phase mit dem eigentlichen Heiz- und Schweißbereich.

Die Bleche (3,4) können eine Beschichtung (23) aufweisen, die z. B. aus einem Zinküberzug besteht. Die Beschichtung (23) ist in der Schweißzone an den Blechrändern unerwünscht und kann das Gefüge der Schweißnaht ungünstig beeinflussen.

Vor dem eigentlichen Schweißprozeß wird die Beschichtung (23) durch ein oder mehrere, vorzugsweise zwei kurze Stromimpulse mit dem hochfrequenten Wechselstrom entfernt. Die Amplitude und Dauer der Stromimpulse (19) richtet sich nach der Art der Beschichtung (23). In der bevorzugten Ausführungsform werden die Blechränder soweit erwärmt, daß die Beschichtung (23) dort schmilzt und verdampft.

In der praktischen Ausführungsform von zinkbeschichteten Stahlblechen ist die Amplitude der Stromimpulse (19) ca. zwei- bis dreimal so hoch wie die Amplitude des für den nachfolgenden Schweißprozeß verwendeten Heizstroms oder Grundstroms (21). Ferner empfiehlt es sich, bei zwei oder mehr Stromimpulsen (19) den ersten Stromimpuls (19) länger als die nachfolgenden Stromimpulse (19) zu machen.

Beispielsweise kann der erste Stromimpuls (19) doppelt so lang wie die anderen sein. Zwischen den Stromimpulsen (19) empfiehlt es sich, eine Pause (20) einzulegen, in der der Strom abgeschaltet oder zumindest deutlich reduziert wird. In dieser Zeit können die Blechränder kurz abkühlen. Es empfiehlt sich, zwischen allen Stromimpulsen (19) solche Pausen (20) einzulegen. In einem praktischen Ausführungsbeispiel dauert bei der Verschweißung Zweier zinkbeschichteter Stahlbleche der erste Stromimpuls (19) ca. 100 msec und der zweite Stromimpuls (19) ca. 50 msec. Die dazwischenliegende Pause (20) kann so lang wie der zweite Stromimpuls (19) sein.

Für den eigentlichen Schweißprozeß werden die Bleche (3,4) zur Erwärmung mit dem hochfrequenten Wechselstrom als Heizstrom oder Grundstrom (21) beaufschlagt. Die Amplitude des Grundstroms (21) kann, wie in Fig. 7 gezeigt, im wesentlichen konstant sein oder in einer Rampenform stetig erhöht oder verringert werden. Gegebenenfalls kann hierbei auch eine Veränderung des Abstands des nachfolgend erläuterten Zusatzleiters (5) erfolgen. Der Grundstrom (21) kann unmittelbar nach dem letzten Stromimpuls (19) eingeschaltet werden. Dazwischen kann allerdings auch eine weitere Pause (20) liegen, in der der Strom wiederum abgeschaltet oder zumindest deutlich verringert wird. Wenn im Stromprogramm die vorbeschriebene erste Phase mit der Entfernung der Beschichtung vorgesehen ist, kann durch die Vorerwärmung die nachfolgende Heizphase verkürzt werden. Der Grundstrom (21) ist dann weniger lang eingeschaltet als Stromprogrammen und Blechpaarungen, bei denen keine Beschichtung vorhanden ist und entfernt werden muß. Durch die Stromimpulse (19) wird die Beschichtung (23) entsprechend der Erwärmungstiefe in den Blechen (3,4) nur in einem schmalen Bereich entlang der Blechränder in der Schweißzone entfernt. Figur 6 verdeutlicht dies mit strichlierten Linien.

Der Erwärmungsprozeß kann über verschiedene Parameter gesteuert werden, z.B. über die Blechtemperatur, die eingebrachte Energie oder die Zeit. Die Schweißvorrichtung (1) besitzt dafür entsprechende Meßeinrichtungen (nicht dargestellt), die mit der Steuerung (12) verbunden sind.

Es empfiehlt sich, den Schweißstrom oder Heizstrom kurz vor oder bei Stauchbeginn impulsartig bzw. kurzzeitig zu erhöhen (22). Dies geschieht über eine Zeitspanne von ca. 50 - 300 msec. Die Amplitude der Erhöhung beträgt z.B. das Zwei- bis Dreifache der Grundstrom-Amplitude. Beim Stauchen wird der Schweißstrom rechtzeitig vor der Berührung der Werkstücke (3,4) auf "0" abgesenkt.

Die Schweißvorrichtung (1) bzw. Schweißanordnung von Fig. 1 bis 4 weist zum Schweißen von Werkstücken (3,4) mit unterschiedlicher thermischer Empfindlichkeit einen stromdurchflossenen elektrischen Zusatzleiter (5) auf, der parallel zu einem der Bleche (3,4) geschaltet ist. Im bevorzugten Ausführungsbeispiel besteht die elektrische Parallelschaltung zum thermisch empfindlicheren bzw. dünneren Blech (4).

Wie Figur 2 und 4 verdeutlichen, ist der Zusatzleiter (5) mit Abstand zu den Blechen (3,4) angeordnet und mit dem parallel geschalteten Blech (4) endseitig jeweils durch Zusatzanschlußleitungen (11) verbunden. Der Zusatzleiter (5) ist stabförmig ausgebildet und parallel zum Spalt (7) bzw. den Blechrändern ausgerichtet. Er kann seine Querschnittsform, insbesondere seine spaltnahen Kontur, über die Länge auch ändern und Vorsprünge und/oder Vertiefungen haben.

Im Ausführungsbeispiel der Figur 1 und 2 ist der Zusatzleiter (5) über dem thermisch empfindlicheren bzw. dünneren Blech (4) angeordnet und befindet sich in Nähe des Spaltes (7) bzw. des dortigen Blechrandes.

Der Zusatzleiter (5) bildet eine Strombrücke, die einen Teil des Stromes ableitet. Im thermisch empfindlicheren bzw. dünneren Blech (4) wird hierdurch der Stromdurchfluß verringert. Im elektrischen Zusatzleiter (5) und im Blech (4) sind die Stromlaufrichtungen gleich gerichtet.

Der Zusatzleiter (5) ist in einer geeigneten Haltevorrichtung (nicht dargestellt) angeordnet. Vorzugsweise ist diese verstellbar, so daß der Abstand (17) zum Blech (4) verändert werden kann. Im Ausführungsbeispiel von Figur 1 und 2 ist der Abstand (17) zwischen Zusatzleiter (5) und Blech (4) so groß gewählt, daß induktive Einflüsse weitgehend unterdrückt und der induktive Widerstand der Schleife weitgehend reduziert ist.

Alternativ ist es aber auch möglich, durch Abstandsveränderung den induktiven bzw. komplexen Widerstand gezielt zu beeinflussen und auf einen gewünschten Wert einzustellen. Eine Beeinflussung ist auch durch Konturänderungen des Zusatzleiters (5), insbesondere an der zum Spalt (7) weisenden Seite, möglich. In diesen Fällen wird mit dem Zusatzleiter (5) erreicht, daß durch das thermisch empfindlichere Blech (4) weniger Strom als durch das andere Blech (3) fließt, wodurch der Energieeintrag und die Erwärmung des Bleches (4) verringert werden. Der Abgleich erfolgt vorzugsweise derart, daß beide Bleche (3,4) sich trotz ihres unterschiedlichen thermischen Verhaltens ungefähr gleichmäßig an den spaltnahen Rändern erwärmen. Es entstehen an den spaltnahen Rändern der Bleche (3,4) im wesentlichen gleich tiefe Wärmeeinflußzonen.

Im Ausführungsbeispiel von Figur 3 und 4 ist der Zusatzleiter (5) über dem thermisch unempfindlicheren oder dickeren Blech (3) angeordnet. Die Zusatzanschlußleitungen (11) überbrücken in diesem Fall den Spalt (7) und sind wiederum an den Stirnenden des Bleches (4) angeschlossen. Der Zusatzleiter (5) befindet sich in diesem Fall in einem relativ geringen Abstand über dem Blech (3). Der Abstand ist vorzugsweise geringer als im Ausführungsbeispiel von Fig. 1 und 2. Der Zusatzleiter (5) erstreckt sich nahe und längs des Spaltes (7) bzw. des dortigen Blechrandes.

Bei dieser Ausführungsform wird der induktive Einfluß der vom Zusatzleiter (5) und vom Blech (4) gebildeten Leiterschleife wirksam. Der Strom fließt hier in Gegenrichtung zur Stromrichtung im Blech (3). Dies bewirkt eine Stromkonzentration im oberen Bereich des Bleches (3), der dem Zusatzleiter (5) und dem Spalt (7) zugewandt ist. Hierdurch entsteht ein Erwärmungsgradient (13) über die Dicke des Bleches (3), der in Figur 4 durch eine gestrichelte Linie angedeutet ist. Im oberen Bereich ist die Wärmeeinflußzone breiter als im unteren Bereich.

In beiden Ausführungsbeispielen, insbesondere aber in Figur 3 und 4 sind die unterschiedlich dicken Bleche (3,4) mit ihren Oberseiten im wesentlichen bündig zueinander ausgerichtet. Der Zusatzleiter (5) befindet sich oberhalb dieser Oberseite. Bei dieser Anordnung hat der Erwärmungsgradient (13) zur Folge, daß das dickere Blech (3) vor allem im Verbindungsbereich mit dem dünneren Blech (4) erwärmt wird.

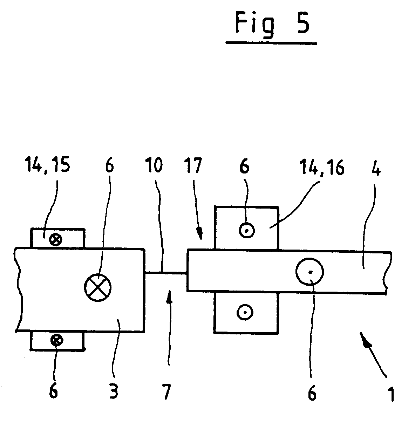

Fig. 5 zeigt eine Alternative zur Stromableitung bzw. zur unterschiedlichen Erwärmung der beiden Bleche (3,4) mittels unterschiedlicher Spannelemente (15,16). Hierfür gibt es mehrere Möglichkeiten.

Zum einen können ein oder beide Spannelemente (15,16) durch den leitenden Kontakt mit den Werkstücken (3,4) als Strombrücke ähnlich wie der Zusatzleiter (5) fungieren. Zumindest ein Spannelement (16) ist dann elektrisch leitend und das andere nicht. Alternativ können auch beide Spannelemente (15,16) elektrisch leitend sein, durch unterschiedliche Werkstoffwahl aber verschiedene Leitfähigkeit haben. Zudem können die Spannelemente (15,16) sich in der Querschnittsform, insbesondere in der Höhe im spaltnahen Bereich und damit im Widerstand unterscheiden. Über die Länge kann sich der Querschnitt auch ändern und z.B. zahn- oder wulstartige Vorsprünge und/oder Vertiefungen aufweisen. Diese Konturänderungen sind vorzugsweise an der spaltnahen Seite der Spannelemente (15,16) zu finden. Das Spannelement (16) mit der höheren elektrischen Leitfähigkeit bzw. dem geringeren Widerstand ist auch hier dem thermisch empfindlicheren Blech (4) zugeordnet.

Eine weitere Einflußmöglichkeit besteht über die Wahl des Abstands (17) zwischen den Spannelementen (15,16) und dem spaltnahen Rand des jeweils zugehörigen Blechs (3,4). Der Abstand (17) wird auch als Ausspannlänge bezeichnet. Der Abstand (17) kann zum einen durch die Positionierung der Bleche (3,4) in den Spannelementen (15,16) bestimmt werden. Eine Abstandsänderung ist aber auch durch die Formgebung der Spannelemente (15,16) und die vorerwähnte Konturänderung erzielbar. An den Vorsprüngen ist der Abstand (17) kleiner und in den Vertiefungen größer. Je kleiner der Abstand (17), desto größer der Einfluß und die Wirkung der Stromableitung. Der Abstand (17) wird beim thermisch empfindlicheren Blech (4) kleiner als beim anderen Blech (3) gewählt.

Eine Beeinflussung ist ferner durch eine unterschiedliche Wärmeleitfähigkeit der Spannelemente (15,16), evtl. in Verbindung mit variierenden Abständen (17) und/oder Spannelementformen, möglich. Hierdurch läßt sich eine entsprechend differierende Wärmeableitung von den Blechrändern erzielen.

Weiter können sich die Spannelemente (15,16) in der Permeabilität unterscheiden. Vorzugsweise ist nur eines der Spannelemente (15,16) ferromagnetisch und das andere nicht. Mit einem ferromagnetischen Spannelement (15,16) läßt sich die Energieverteilung im Spaltbereich stark beeinflussen. Das ferromagnetische Spannelement (16) wird dem thermisch empfindlicheren bzw. dünneren Blech (4) zugeordnet.

Figur 6 zeigt eine Gestaltungsvariante der Bleche (3,4) und der Spannelemente (15,16). Die beiden Bleche (3,4) haben hier eine langgestreckte Profilform und besitzen einen im wesentlichen C-förmigen Querschnitt. Solche Profile werden z. B. in der Fahrzeugtechnik für Karosserieholme eingesetzt. Die beiden Bleche (3,4) werden an ihren Stirnrändern mit der vorstehend beschriebenen Schweißtechnik verbunden. Die Spannelemente (15,16) sind der Kontur (18) der Bleche (3,4) nachgebildet und umgreifen vorzugsweise innen und außen die Bleche (3,4). Sie sind in der vorbeschriebenen Weise mit Abstand zu den stirnseitigen Blechrändern angeordnet, wie das die Seitenansicht von Figur 6 im linken Teil zeigt. Im Querschnitt gesehen übergreifen die Spanneinrichtungen (15,16) die Bleche (3,4) vorzugsweise über den gesamten Umfang und schließen bündig mit den Längsrändern der Bleche (3,4) ab. Die Spannelemente (15,16) können alternativ stellenweise unterbrochen oder in einzelne Spannpratzen unterteilt sein, wobei eine geeignete elektrische oder magnetische Verbindung untereinander besteht.

Über die gezeigten Ausführungsbeispiele hinaus sind weitere Variationen möglich. Die Anschlußpunkte der Leitungen (9,10,11) müssen nicht an den Enden der Bleche (3,4) liegen, sondern können bei kürzeren Nahtlängen weiter innen liegen. Es empfiehlt sich, die Anschlußstellen nahe des Spaltes (7) und an den Enden der gewünschten Naht anzubringen. In gleicher Weise muß sich der Zusatzleiter (5) auch nicht über die gleiche Länge wie das Blech (4) erstrecken. Ferner müssen die Zusatzanschlußleitungen (11) nicht am Blech (4) angeschlossen sein, sondern können auf andere geeignete Weise elektrisch parallel zum Stromfluß im Werkstück (4) geschaltet sein. Gegebenenfalls kann der Zusatzleiter (5) auch direkt mit der Stromquelle (2) verbunden sein. Die Stromlaufrichtungen im Zusatzleiter (5) bzw. den Spannelementen (15,16) und im thermisch empfindlicheren Blech (4) sollten allerdings gleich gerichtet sein.

### BEZUGSZEICHENLISTE

- 1: Schweißvorrichtung, Schweißanordnung
- 2: Stromquelle, Generator
- 3: Werkstück, Blech, dick
- 4: Werkstück, Blech, dünn
- 5: Zusatzleiter
- 6: Stromrichtung
- 7: Spalt
- 8: Stauchantrieb
- 9: Anschlußleitung (Blech)
- 10: Verbindungsleitung (Bleche)
- 11: Zusatzanschlußleitung
- 12: Steuerung
- 13: Erwärmungsgradient
- 14: Einspannung
- 15: Spannelement
- 16: Spannelement
- 17: Abstand, Ausspannlänge
- 18: Kontur
- 19: Stromimpuls
- 20: Pause
- 21: Grundstrom
- 22: Erhöhung
- 23: Beschichtung

## Patentansprüche

1. Verfahren zum Schweißen von Werkstücken, insbesondere Blechen, wobei die Werkstücke an den zu verschweißenden Rändern mit Hilfe eines hochfrequenten Wechselstroms konduktiv oder induktiv erwärmt und anschließend unter Druck miteinander verbunden werden, dadurch **gekennzeichnet**, daß mit einem Stromprogramm geschweißt wird, das die Werkstücke (3,4) über mehrere Zeitabschnitte mit unterschiedlich hohen Heizströmen beaufschlagt, wobei der Heizstron kurz vor oder bei Stauchbeginn kurzzeitig über den Grundstrom (21) erhöht (22) wird.

2. Verfahren nach Anspruch 1, dadurch **gekennzeichnet**, daß die Amplitude der Erhöhung (22) das Zwei- bis Dreifache des Grundstroms (21) beträgt.

3. Verfahren nach Anspruch 1 oder 2, dadurch **gekennzeichnet**, daß die Erhöhung (22) eine Dauer von ca. 50 bis 300 msec hat.

4. Verfahren nach Anspruch 1, 2 oder 3, dadurch **gekennzeichnet**, daß zum Entfernen einer Beschichtung (23) auf den Werkstücken (3,4) vor oder zu Beginn des Schweißprozesses an die Werkstücke (3,4) ein oder mehrere Stromimpulse (19) mit einer über dem Grundstrom (21) liegenden Amplitude gelegt werden.

5. Verfahren nach Anspruch 4, dadurch **gekennzeichnet**, daß die Höhe und Dauer der Stromimpulse (19) derart gesteuert wird, daß durch die Erwärmung der Ränder der Werkstücke (3,4) die Beschichtung (23) an diesen Stellen verdampft.

6. Verfahren nach Anspruch 4 oder 5, dadurch **gekennzeichnet**, daß der zweite Stromimpuls (19) kürzer als der erste ist.

7. Verfahren nach Anspruch 4, 5 oder 6, dadurch **gekennzeichnet**, daß zwischen den Stromimpulse (19) eine Pause (20) mit Verringerung oder Abschaltung des Stroms liegt, wobei die Ränder der Werkstücke (3,4) abkühlen.

8. Verfahren nach einem der Ansprüche 4 bis 7, dadurch **gekennzeichnet**, daß nach den Stromimpulsen (19) eine Pause (20) mit Verringerung oder Abschaltung des Stroms folgt.

9. Verfahren nach Anspruch 1 oder einem der folgenden, dadurch **gekennzeichnet**, daß die Werkstücke (3,4) zumindest an den zu schweißenden Rändern eine gewölbte Kontur (18) aufweisen und mit der Kontur (18) angepaßten Spannelementen (15,16) gespannt werden.

10. Verfahren nach Anspruch 1 oder einem der folgenden, dadurch **gekennzeichnet**, daß Werkstücke (3,4) mit unterschiedlichen Dicken oder unterschiedlichen Werkstoffen mit unterschiedlicher Wärmeeinbringung bzw. Energiezufuhr beaufschlagt werden.

11. Verfahren nach Anspruch 10, dadurch **gekennzeichnet**, daß ein Werkstück (3) durch Stromkonzentration über die Dicke unterschiedlich erwärmt wird.

12. Verfahren nach Anspruch 1 oder einem der folgenden, dadurch **gekennzeichnet**, daß der Stromdurchfluß durch einen parallel geschalteten stromdurchflossenen elektrischen Zusatzleiter (5) beeinflußt wird.

13. Verfahren nach Anspruch 12, dadurch **gekennzeichnet**, daß der Stromdurchfluß am Werkstück (3,4) durch Veränderung des Abstands zwischen dem Zusatzleiter (5) und dem Werkstück (3,4) eingestellt wird.

14. Verfahren nach Anspruch 12 oder 13, dadurch **gekennzeichnet**, daß der Zusatzleiter (5) mit geringem Abstand über dem thermisch unempfindlicheren Werkstück (3) gehalten wird, wobei ein Erwärmungsgradient (13) über die Werkstückdicke eingestellt wird.

15. Verfahren nach Anspruch 1 oder einem der folgenden, dadurch **gekennzeichnet**, daß beim Stauchen der Vorschub und die Werkstückverkürzung gemessen bzw. berechnet werden.

16. Verfahren nach Anspruch 1 oder einem der folgenden, dadurch **gekennzeichnet**, daß der Erwärmungsprozeß nach der Zeit, der zugeführten Energie oder der Temperatur gesteuert wird.

17. Anordnung zum Schweißen von Werkstücken, insbesondere Blechen, wobei die Werkstücke an den zu verschweißenden Rändern mit Hilfe einer Stromquelle zur Erzeugung eines hochfrequenten Wechselstroms konduktiv oder induktiv erwärmt und anschließend unter Druck miteinander verbunden werden, dadurch **gekennzeichnet**, daß die Stromquelle (2) eine programmierbare Steuerung (12) mit Datenspeicher und einem Stromprogramm aufweist, das die Werkstücke (3,4) über mehrere Zeitabschnitte mit unterschiedlich hohen Heizströmen beaufschlagt und den Heizstrom kurz vor oder bei Stauchbeginn kurzzeitlg erhöht.

18. Anordnung nach Anspruch 17, dadurch **gekennzeichnet**, daß das Stromprogramm zum Entfernen einer Beschichtung (23) auf den Werkstücken (3,4) vor oder zu Beginn des Schweißprozesses an die Werkstücke (3,4) ein oder mehrere Stromimpulse (19) mit einer über dem Grundstrom (21) liegenden Amplitude legt.

19. Anordnung nach Anspruch 17 oder 18, dadurch **gekennzeichnet**, daß die Werkstücke (3,4) zumindest an den zu schweißenden Rändern eine gewölbte Kontur (18) aufweisen und die Spannelemente (15,16) eine der Kontur (18) angepaßte Form besitzen.

20. Anordnung nach Anspruch 17, 18 oder 19, dadurch **gekennzeichnet**, daß zumindest ein stromdurchflossener elektrischer Zusatzleiter (5) mit einem der Werkstücke (3,4) elektrisch parallel geschaltet und mit Abstand über einem Werkstück (3,4) angeordnet ist.

21. Anordnung nach Anspruch 20, dadurch **gekennzeichnet**, daß unterschiedlich dicke Werkstücke (3,4) an einer Oberfläche höhenbündig zueinander ausgerichtet sind und der Zusatzleiter (5) mit Abstand über dieser Oberfläche und dem dickeren Werkstück (3) positioniert ist.

22. Anordnung nach einem der Ansprüche 17 bis 21, dadurch **gekennzeichnet**, daß die Spannelemente (15,16) zur Steuerung der Energiezufuhr in der Form, in der Wärme- oder elektrischen Leitfähigkeit, in der Permeabilität und/oder der Ausspannlänge (17) unterschiedlich ausgebildet sind.

23. Anordnung nach einem der Ansprüche 17 bis 22, dadurch **gekennzeichnet**, daß die Steuerung (12) mit Meßeinrichtungen zur Temperatur-, Energie- und/oder Zeiterfassung verbunden ist.

## Claims

1. Process for welding workpieces, in particular metal sheets, the workpieces being heated conductively or inductively at the edges to be welded, using a high-frequency alternating current, and subsequently being joined to each other under pressure, characterized in that welding takes place using a current program heating currents of different levels which applies to the workpieces (3, 4) over a plurality of time intervals, the heating current being briefly increased (22) above the basic current (21) shortly before or when upsetting is begun.

2. Process according to Claim 1, characterized in that the amplitude of the increase (22) is two to three times that of the basic current (21).

3. Process according to Claim 1 or 2, characterized in that the increase (22) has a duration of about 50 to 300 ms.

4. Process according to Claim 1, 2 or 3, characterized in that, in order to remove a coating (23) on the workpieces (3, 4), before or at the beginning of the welding process, one or more current pulses (19) having an amplitude above that of the basic current (21) are applied to the workpieces (3, 4).

5. Process according to Claim 4, characterized in that the level and duration of the current pulses (19) are controlled in such a way that, as a result of the heating of the edges of the workpieces (3, 4), the coating (23) vaporizes at these points.

6. Process according to Claim 4 or 5, characterized in that the second current pulse (19) is shorter than the first.

7. Process according to Claim 4, 5 or 6, characterized in that between the current pulses (19) there is a pause (20) during which the current is reduced or switched off, the edges of the workpieces (3, 4) cooling down.

8. Process according to one of Claims 4 to 7, characterized in that after the current pulses (19), there follows a pause (20) during which the current is reduced or switched off.

9. Process according to Claim 1 or one of those following, characterized in that the workpieces (3, 4) have a domed contour (18), at least at the edges to be welded, and are clamped using clamping elements (15, 16) that are matched to the contour (18).

10. Process according to Claim 1 or one of those following, characterized in that the workpieces (3, 4) of different thicknesses or different materials have a different amount of heat or supply of power applied to them.

11. Process according to Claim 10, characterized in that a workpiece (3) is heated differently over its thickness by means of current concentration.

12. Method according to Claim 1 or one of those following, characterized in that the flow of current is influenced by an additional electric conductor (5) which is connected in parallel and through which current flows.

13. Process according to Claim 12, characterized in that the flow of current through the workpiece (3, 4) is set by changing the distance between the additional conductor (5) and the workpiece (3, 4).

14. Process according to Claim 12 or 13, characterized in that the additional conductor (5) is held at a short distance above the thermally less sensitive workpiece (3), a heat gradient (13) over the workpiece thickness being established.

15. Process according to Claim 1 or one of those following, characterized in that during upsetting, the advance and the shortening of the workpiece are measured or calculated.

16. Process according to Claim 1 or one of those following, characterized in that the heating process is controlled as a function of the time, the power supplied or the temperature.

17. Arrangement for welding workpieces, in particular metal sheets, the workpieces being heated conductively or inductively at the edges to be welded, using a current source for generating a high-frequency alternating current, and subsequently being joined to each other under pressure, characterized in that the current source (2) has a programmable controller (12) which has a data store and a current program which applies heating currents of different levels to the workpieces (3, 4) over a plurality of time intervals and briefly increases the heating current shortly before or when upsetting is begun.

18. Arrangement according to Claim 17, characterized in that, in order to remove a coating (23) on the workpieces (3, 4), before or at the beginning of the welding process, the current program applies one or more current pulses (19) having an amplitude above that of the basic current (21) to the workpieces (3, 4).

19. Arrangement according to Claim 17 or 18, characterized in that the workpieces (3, 4) have a domed contour (18), at least at the edges to be welded, and the clamping elements (15, 16) have a shape that is matched to the contour (18).

20. Arrangement according to Claim 17, 18 or 19, characterized in that at least one additional electric conductor (5), through which current flows, is connected electrically in parallel with one of the workpieces (3, 4) and is arranged at a distance above a workpiece (3, 4).

21. Arrangement according to Claim 20, characterized in that workpieces (3, 4) of different thicknesses are aligned on a surface such that their heights are flush with one another, and the additional conductor (5) is positioned at a distance above this surface and the thicker workpiece (3).

22. Arrangement according to one of Claims 17 to 21, characterized in that the clamping elements (15, 16) for controlling the supply of power are of different designs in terms of shape, thermal or electrical conductivity, permeability and/or the length they cover (17).

23. Arrangement according to one of Claims 17 to 22, characterized in that the controller (12) is connected to measuring devices for registering temperature, power and/or time.

## Revendications

1. Procédé de soudage de pièces, notamment des tôles, les pièces étant chauffées par conduction ou de manière inductive au niveau des bords à souder entre-eux, à l'aide d'un courant alternatif haute-fréquence, les pièces étant ensuite reliées entre-elles sous pression, **caractérisé** en ce que l'on soude à l'aide d'un programme de courant qui alimente les pièces (3, 4) durant plusieurs intervalles de temps avec des courants de chauffe de niveaux différents, le courant de chauffe étant augmenté (22) brièvement au-dessus du courant nominal (21) peu de temps avant le début ou lors du début du refoulement.

2. Procédé selon la revendication 1, **caractérisé** en ce que l'amplitude de l'augmentation (22) vaut environ deux à trois fois le courant nominal (21).

3. Procédé selon la revendication 1 ou 2, **caractérisé** en ce que l'augmentation (22) est d'une durée d'environ 50 à 300 msec.

4. Procédé selon la revendication 1, 2 ou 3, **caractérisé** en ce que pour éliminer un revêtement (23) sur les pièces (3, 4), on applique aux pièces (3, 4) avant le début ou lors du début du processus de soudage, une ou plusieurs impulsions de courant (19) d'une amplitude située au-dessus du courant nominal (21).

5. Procédé selon la revendication 4, **caractérisé** en ce que le niveau et la durée des impulsions de courant (19) sont commandés de manière telle, que par l'échauffement des bords des pièces (3, 4), un revêtement (23) se trouvant à ces endroits, soit vaporisé.

6. Procédé selon la revendication 4 ou 5, **caractérisé** en ce que la seconde impulsion de courant (19) est plus courte que la première.

7. Procédé selon la revendication 4, 5 ou 6, **caractérisé** en ce qu'entre les impulsions de courant (19) se situe une pause (20) avec une réduction ou une interruption du courant, les bords des pièces (3, 4) refroidissant à cette occasion.

8. Procédé selon l'une des revendications 4 à 7, **caractérisé** en ce qu'aux impulsions de courant (19) succède une pause (20) avec une réduction ou une interruption du courant.

9. Procédé selon la revendication 1 ou l'une des suivantes, **caractérisé** en ce que les pièces (3, 4) présentent, au moins aux bords à souder, un profil (18) cintré, et sont serrées par des éléments de serrage (15, 16) adaptés au profil (18).

10. Procédé selon la revendication 1 ou l'une des suivantes, **caractérisé** en ce que des pièces (3, 4) d'épaisseurs différentes ou constituées de matériaux différents, sont soumises à un apport de chaleur différent ou une amenée d'énergie différente.

11. Procédé selon la revendication 10, **caractérisé** en ce qu'une pièce (3) est chauffée de manière différente sur l'épaisseur par concentration du courant.

12. Procédé selon la revendication 1 ou l'une des suivantes, **caractérisé** en ce que le passage de courant est influencé par un conducteur électrique additionnel (5) traversé par le courant et monté en parallèle.

13. Procédé selon la revendication 12, **caractérisé** en ce que le passage de courant sur la pièce (3, 4) est réglé en modifiant la distance entre le conducteur additionnel (5) et la pièce (3, 4).

14. Procédé selon la revendication 12 ou 13, **caractérisé** en ce que le conducteur additionnel (5) est maintenu à faible distance au-dessus de la pièce (3) la moins sensible sur le plan thermique, un gradient d'échauffement (13) étant réglé sur l'épaisseur de la pièce.

15. Procédé selon la revendication 1 ou l'une des suivantes, **caractérisé** en ce que lors du refoulement, l'avance et le raccourcissement de pièce sont mesurés et/ou calculés.

16. Procédé selon la revendication 1 ou l'une des suivantes, **caractérisé** en ce que le processus d'échauffement est commandé en fonction de la durée, de l'énergie amenée ou de la température.

17. Agencement de soudage de pièces, notamment des tôles, les pièces étant chauffées par conduction ou de manière inductive au niveau des bords à souder entre-eux, à l'aide d'une source de courant destinée à produire un courant alternatif haute-fréquence, les pièces étant ensuite reliées entre-elles sous pression, **caractérisé** en ce que la source de courant (2) présente une commande programmable (12) à mémoire de données et un programme de courant, qui alimente les pièces (3, 4) durant plusieurs intervalles de temps avec des courants de chauffe de niveaux différents, et augmente brièvement le courant de chauffe peu de temps avant le début du refoulement ou lors du début du refoulement.

18. Agencement selon la revendication 17, **caractérisé** en ce que le programme de courant, en vue d'éliminer un revêtement (23) sur les pièces (3, 4), applique aux pièces (3, 4), avant le début ou lors du début du processus de soudage, une ou plusieurs impulsions de courant (19) d'une amplitude située au-dessus du courant nominal (21).

19. Agencement selon la revendication 17 ou 18, **caractérisé** en ce que les pièces (3, 4) présentent, au moins aux bords à souder, un profil (18) cintré, et les éléments de serrage (15, 16) possèdent une forme adaptée au profil (18).

20. Agencement selon la revendication 17, 18 ou 19, **caractérisé** en ce qu'au moins un conducteur électrique additionnel (5) traversé par le courant est monté électriquement en parallèle avec l'une des pièces (3, 4) et est disposé à distance au-dessus d'une pièce (3, 4).

21. Agencement selon la revendication 20, **caractérisé** en ce que des pièces (3, 4) d'épaisseurs différentes sont mutuellement alignées en hauteur par une de leurs surfaces, et le conducteur additionnel (5) est positionné à distance au-dessus de cette surface et de la pièce (3) plus épaisse.

22. Agencement selon l'une des revendications 17 à 21, **caractérisé** en ce que pour commander l'alimentation en énergie, les éléments de serrage (15, 16) sont de configuration différente quant à la forme, quant à la conductibilité thermique ou électrique, quant à la perméabilité et/ou quant à la longueur de serrage (17).

23. Agencement selon l'une des revendications 17 à 22, **caractérisé** en ce que la commande (12) est reliée à des dispositifs de mesure pour relever la température, l'énergie et/ou le temps.
